Europäisches Patentamt

European Patent Office

Office européen des brevets

(19)

(11) Publication number : **0 626 781 A2**

(12) # EUROPEAN PATENT APPLICATION

(21) Application number : **94420149.0**

(22) Date of filing : **24.05.94**

(51) Int. Cl.⁵ : **H04N 1/46**

(30) Priority : **28.05.93 US 68941**

(43) Date of publication of application :
**30.11.94 Bulletin 94/48**

(84) Designated Contracting States :
**DE FR GB**

(71) Applicant : **EASTMAN KODAK COMPANY**
**343 State Street**
**Rochester New York 14650-2201 (US)**

(72) Inventor : **Wan, Shijie J., c/o EASTMAN KODAK**
**COMPANY**
**Patent Legal Staff,**
**343 State Street**
**Rochester, New York 14650-2201 (US)**
Inventor : **Miller, Rodney L., c/o EASTMAN**
**KODAK COMPANY**
**Patent Legal Staff,**
**343 State Street**
**Rochester, New York 14650-2201 (US)**
Inventor : **Sullivan, James R., c/o EASTMAN**
**KODAK COMPANY**
**Patent Legal Staff,**
**343 State Street**
**Rochester, New York 14650-2201 (US)**

(74) Representative : **Buff, Michel et al**
**Kodak-Pathé**
**Département des Brevets et Licences CRT**
**Centre de Recherches et de Technologie**
**Zone Industrielle**
**F-71102 Chalon sur Saône Cédex (FR)**

(54) **Method and apparatus for mapping between color spaces and creating a three dimensional inverse look-up table.**

(57) The present invention provides a method to map color signals in a device independent color space (DICS) to color signals in a device dependent color space (DDCS) for fast color calibration. The present invention combines two operations of gamut clipping and backward interpolation into one inverse look-up table (ILUT) which contains lattice color signals in the DICS as input signals. The ILUT is used during forward interpolation to map signals from the DICS to the DDCS. The ILUT is created using a gamut descriptor based on a given look-up table (LUT) which contains lattice color points in the DDCS as input signals. The gamut descriptor is generated by determining a set of gamut boundary points located on a series of parallel planes with fixed angles. When the ILUT is not available, the present invention uses a gamut descriptor for fast color signal conversion from the DICS to the DDCS.

FIG. 6

Cross Reference to Related Application

This application is related to the concurrently filed applications entitled Method And Apparatus For Convex Interpolation For Color Calibration by Wan, Miller and Sullivan having US serial number 068,823 and Method And Apparatus For Determining A Gamut Boundary And A Gamut Descriptor by Wan and having US serial number 068,887, both incorporated by reference herein.

BACKGROUND OF THE INVENTION

Field of the Invention

The present invention is directed to a fast mapping method and apparatus for converting data from one space to another space and creating an inverse look-up table for the conversion and, more particularly, to mapping using a gamut descriptor defining the boundaries of the gamut of a target device and to creating a color calibration inverse look-up table which will allow color values or signals, which have been converted from a first device dependent color space into color values or signals in a device independent color space, to be converted from the device independent color space into a second device dependent color space using a forward interpolation.

Description of the Related Art

Color information is stored in different color spaces for different devices. A color space is a coordinate system in which the colors reproducible by the device are points or signals in the coordinate system. For example, RGB color space which has color axes of red (R), green (G) and blue (B) is used for CRTs and CMY color space which has color axes of cyan (C), magenta (M) and yellow (Y) is used for printers. Both RGB and CMY are device dependent color spaces with signal values or code values typically ranging from 0 to 255. To reproduce a color image generated for one device on another device, a color calibration process is required. One goal of the color calibration process is to find a mapping from one device-dependent color space (DDCS) to another DDCS, so that colors can be reproduced correctly. U.S. Patent 4,500,919 describes one way of performing such a transformation. A common approach to color calibration is to introduce a device independent color space (DICS) such as CIELAB or (L*a*b*) or CIELUV (L*u*v*) or CIEXYZ between two DDCSs.

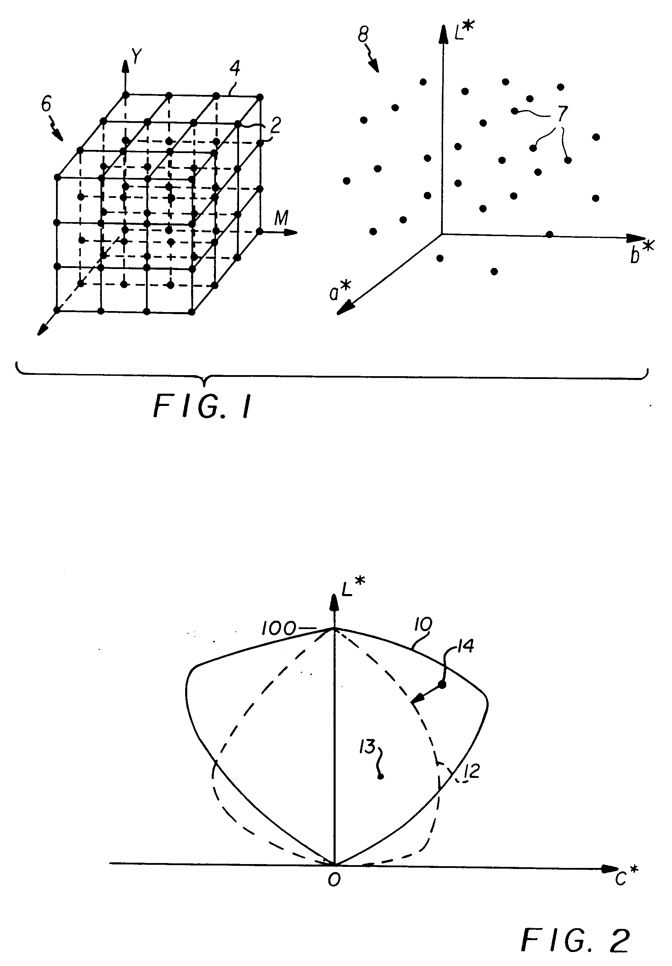

The relationship between a DDCS and a DICS can be established by a 3D→3D look-up table (LUT), which may be conventionally obtained by measuring a number of color patches generated from the specific device. For convenience, the code values of these color patches are usually chosen to be lattice points spanning the full range of the DDCS, while their corresponding points in the DICS may be distributed irregularly. Figure 1 shows lattice points 2 of a color cube 4 in the DDCS 6 of a device, such as a printer, and their corresponding points 7 in the DICS 8. The region of all colors in the DICS producible by a device is called the gamut of the device. The gamuts of two devices, such as a printer and a CRT or two printers, are usually not the same but overlap.

Figure 2 shows a vertical slice of the gamuts 10 and 12 of two devices. When transforming color signals from a device I to a device II, if a color signal 13 is within the gamuts 10 and 12, precise color reproduction is possible. If a color signal 14 is out of the gamut 12 of the second device, precise reproduction of this color on the second device is not possible and, in this case, a technique called gamut clipping is required to map or convert the signal 14 into a signal in the gamut 12 of the second device, so that the signal 14 can be reproduced as close as possible as a comparable or equivalent signal of the second device.

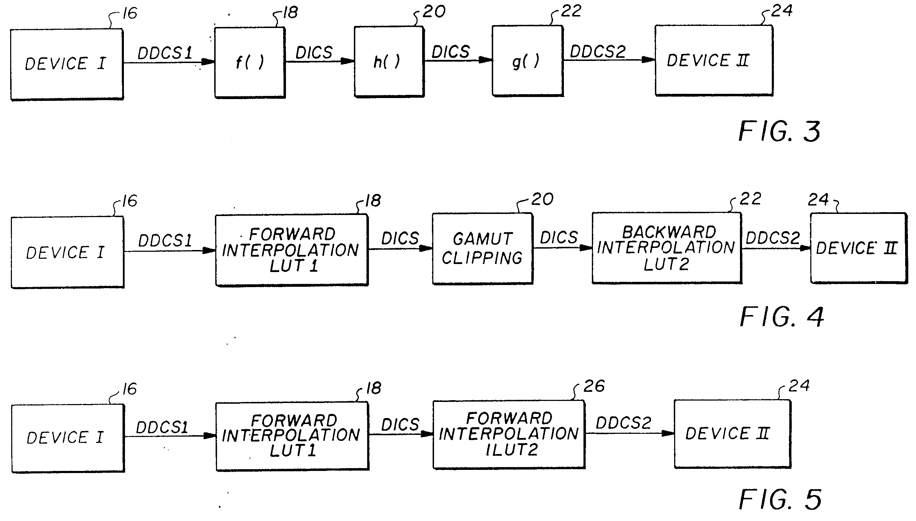

Figure 3 illustrates a general calibration process from device I to device II in which f() is a function converting color signals of device I from the DDCS to the DICS; h() is a function adjusting the color signals from device I (including gamut clipping); and g() is a function converting color signals in the DICS to color signals for device II. As a special case, the transformation functions in Figure 3 can be performed, as illustrated in Figure 4, using forward interpolation and a look-up table LUT1 for converting from DDCS1 to DICS for f(), using a gamut clipping for h() and using backward interpolation and LUT2 to convert color signals from the DICS to the DDCS2 for g(). Interpolation from a device dependent color space 6 with lattice points 2 to another space 8 is called forward interpolation while interpolation from the space 8 with non-lattice points to another space 6 is called backward interpolation. Given a LUT from a DDCS to a DICS is generated, forward interpolation can be used to compute, for any given point in the DDCS, the corresponding point in the DICS, and conventional backward interpolation can be used to compute, for any given point in the DICS, the corresponding point in the DDCS.

The problem with the calibration scheme illustrated in Figure 4 is its efficiency. The forward interpolation 18, as illustrated in Figure 4, uses LUT1 to interpolate from DDCS1 to DICS. This can be done fast because the entry points in LUT1 are lattice points in DDCS1. The backward interpolation 22 uses LUT2 (the LUT designed for conversion from DDCS2 to DICS) to interpolate from DICS to DDCS2. This is a slow process because the points in LUT2 are irregularly distributed (not lattice points) in the DICS, and searching for a proper set of points in the DICS to interpolate a given point is time consuming. The step of gamut clipping can also be computationally expensive. This scheme may require several hours to calibrate an image on a workstation as described by Stone et al. in Color Gamut Mapping And The Printing Of Digital Color Images, ACM Transaction On Graphics, Vol. 7 (a), October 1988, pp. 249-292.

The efficiency of the mapping calibration scheme given in Figure 4 can be significantly improved by a scheme illustrated in Figure 5 in which the two steps of gamut clipping and backward interpolation using the look-up table LUT2 are replaced by a forward interpolation using an inverse look-up table ILUT2. This improvement is possible because the entry points in ILUT2 are lattice points in DICS. With the scheme of Figure 5 calibrating an image can be done in about a minute on a personal workstation. Further simplification is also possible by combining two look-up tables LUT1, and ILUT2 into one look-up table from the DDCS to the DDCS2. In this case only one forward interpolation is required to convert color signals from the DDCS, to the DDCS2. A disadvantage of this closed-system calibration scheme is that the LUT can be used for this one device and cannot be shared by any other devices.

To implement the calibration scheme described in Figure 5, a technique is needed to construct an ILUT from a LUT. Such a technique comprises two components: a gamut clipping strategy and a backward interpolation scheme. Gamut clipping strategies determine how to map out-of-gamut signals to inside the gamut. Backward interpolation schemes interpolate an in-gamut color signal to find a corresponding color signal in the DDCS. One technique creates ILUT as follows. For each entry point in the ILUT, if it is out of the device gamut, a binary search is used to map this point to a gamut boundary point which is then backward interpolated; otherwise, a backward interpolation is used to find the output point in the DDCS. Since determining if a given point is inside the gamut requires a time consuming binary search, and the size of ILUT is large, this method requires several hours to create a $32^3$ ILUT on a personal workstation.

What is needed is a faster technique for mapping between spaces and creating the ILUT.

## SUMMARY OF THE INVENTION

It is an object of the present invention to produce an efficient method of mapping between a device independent color space and a device dependent color space.

It is another object of the present invention to quickly and efficiently create an inverse look-up table from a look-up table.

It is an object of the present invention to use an inverse look-up table for fast color calibration.

It is also an object of the present invention to determine whether a point in the device independent space is inside the gamut.

It is a further object of the present invention to determine inverse look-up table values to convert out-of-gamut points or signals into the gamut of an output device and to convert in-gamut points or signals into the points or signals in the device dependent space.

It is still another object of the present invention to combine both a gamut clipping strategy, used to map out-of-gamut color signals into the gamut, and backward interpolation method, used to map in-gamut signals to signals in a device dependent space, into a single 3D to 3D LUT, namely an ILUT.

The above objects can be attained by a system which quickly maps between coordinate systems by efficiently determining whether a point or color signal is in gamut or out-of-gamut and creates an inverse look-up table by mapping lattice points or color signals from the device independent space to the device dependent space using a look-up table normally used for converting from the device dependent space to the device independent space. A gamut descriptor in the device independent color space is created as follows. For each lattice point color signal in the device independent space, which corresponds to an entry point (a 3D index) in the inverse look-up table, a determination can be easily made as to whether the lattice point is in the gamut or outside the gamut based on the gamut descriptor. If the lattice point color signal is within the gamut a conventional backward interpolation is performed using look-up table output signals to find the inverse table entry for that lattice point. If the lattice point color signal is not in the gamut the signal is clipped to the gamut boundary or inside the gamut and the point is then interpolated to find the entry for that lattice point.

These together with other objects and advantages which will be subsequently apparent, reside in the details of construction and operation as more fully hereinafter described and claimed, reference being made to the accompanying drawings forming a part hereof, wherein like numerals refer to like parts throughout.

## BRIEF DESCRIPTION OF THE DRAWINGS

Figure 1 depicts the correspondence of color signals in a device dependent color space 6 and a device independent color space 8;

Figure 2 shows gamuts 10 and 12 of two different devices;

Figure 3 illustrates how color values in a first device dependent color space are converted into color values in a second device dependent color space via a device independent color space using transform or conversion functions;

Figure 4 illustrates conversion between device dependent color spaces look-up tables and using forward and backward interpolation and gamut clipping;

Figure 5 illustrates conversion with a look-up table and an inverse look-up table both using forward interpolation;

Figure 6 depicts the components of the present invention;

Figure 7 illustrates the process of creating an inverse look-up table using the present invention;

Figure 8 depicts a gamut descriptor; and

Figure 9 illustrates how a determination is made whether a point, color value or signal is in the gamut.

## DESCRIPTION OF THE PREFERRED EMBODIMENTS

The present invention provides a fast method to map points in a device independent color space (DICS) to points in a device dependent color space (DDCS). This invention is applicable to various problems and a description will be provided of, for example, how the present invention can be used to construct an inverse look-up table (ILUT) from a look-up table (LUT).

The present invention uses a device gamut descriptor to speed up the mapping from the DICS to the DDCS. The gamut descriptor is a small set of carefully selected device gamut boundary points in the DICS. These points are preferably uniformly distributed on the gamut boundary, and cover the full range of the gamut. The boundary points are preferably located on a set of equally spaced planes perpendicular to the axis L* (if L*a*b* is the device independent color space being used), the number of points on each plane is fixed, and the angle between two adjacent points on the same plane is preferably fixed, etc. A method of creating a gamut descriptor is set forth in the related application previously mentioned and entitled Method And Apparatus For Determining A Gamut Boundary And A Gamut Descriptor. The distribution pattern of gamut boundary points in the gamut descriptor provides useful information for fast mapping from the DICS to the DDCS.

Depending on the application, the size of a gamut descriptor can be chosen to be from several hundred to several thousand points. Compared with the size of an image, and the size of an ILUT, a gamut descriptor is a small set of points. For this reason, computing a gamut descriptor is not time consuming.

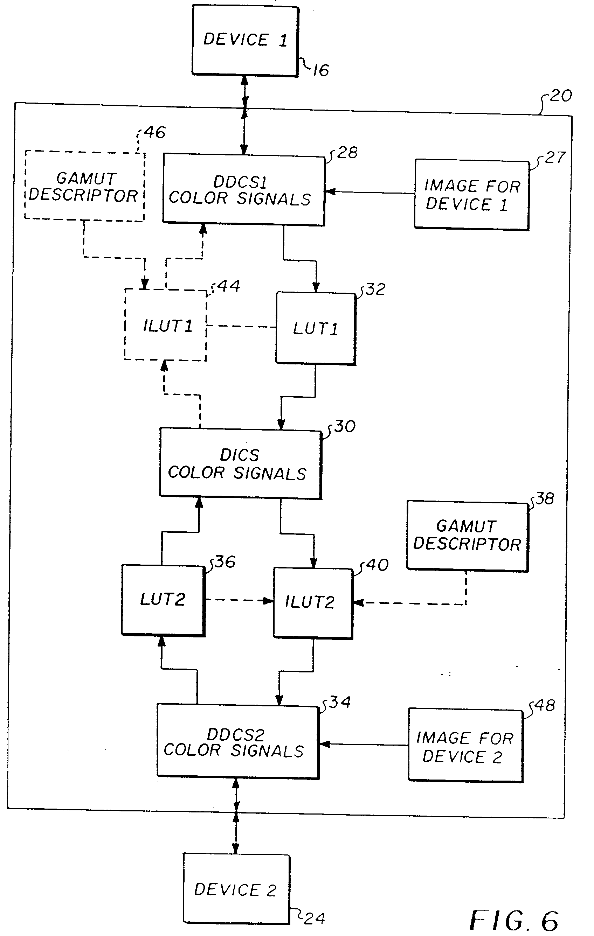

Once the gamut descriptor is obtained, mapping color signals from the DICS to the DDCS is performed as follows. Let x be a given point or signal in the DICS. If the point is inside the gamut specified by the gamut descriptor, the present invention applies a conventional backward interpolation using the look-up table (in this case LUT2) to compute the output signal. Otherwise, the invention maps the signal based on a gamut mapping strategy, such as clipping, to an appropriate signal inside the gamut or on the gamut boundary specified by the gamut descriptor, and then performs a backward interpolation of the signal based on neighboring points in the gamut descriptor. Because the gamut boundary is specified by the gamut descriptor, mapping an out-of-gamut point or signal to the gamut does not require a binary search, and nor does determining if a given point is inside gamut. The mapping method mentioned here will be discussed in more detail with respect to Figures 6-9.

As illustrated in Figure 6, the present invention includes a computer, such as a Sun Workstation or Apple Macintosh, and two output devices 16 and 24 which can be printers or CRTs from different manufacturers. Stored in the computer is an image 27, that is, the color signals which are used to create the image, for printing or display on the first device 16. The color signals for this image are color signals in the first device dependent color space. The present invention is designed to allow such an image to be converted into device dependent color space signals for device number two. In this process of conversion the device dependent color space color signals 28 for the image 26 are converted into device independent color space color signals 30 using a conventional forward interpolation and the look-up table 32 for the first device 16. The color signals 30 for the device independent color space are converted into device dependent color signals 34 for the second device 24 with the look-up table 36, normally used to convert color signals 34 for device 2 into the independent color signals 30, by using backward interpolation. However, as previously discussed, this is a very time consuming operation. Instead the present invention performs a mapping method using the look-up table 36 and a gamut descriptor 38 for the second device 24 to create an inverse look-up table 40. This inverse look-up table can

EP 0 626 781 A2

then be used to rapidly convert the color signals 30 into the color signals 34. The present invention can also be used to create the ILUT1 44 using look-up table 32 and a gamut descriptor 46 for the first device 16, allowing images 48 for the second printing device 24 to be converted to images for the first device.

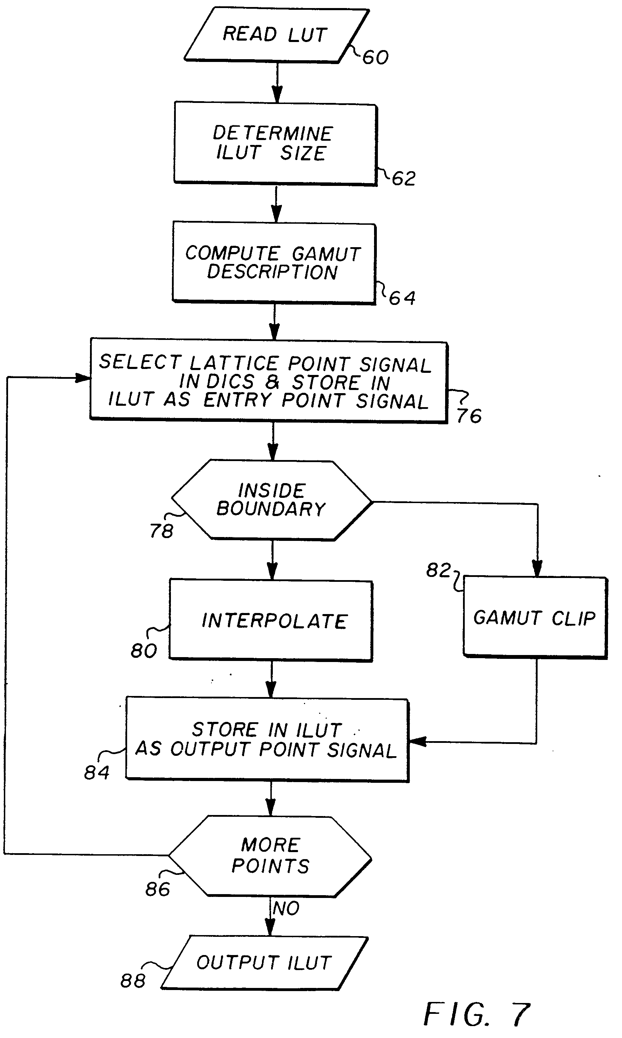

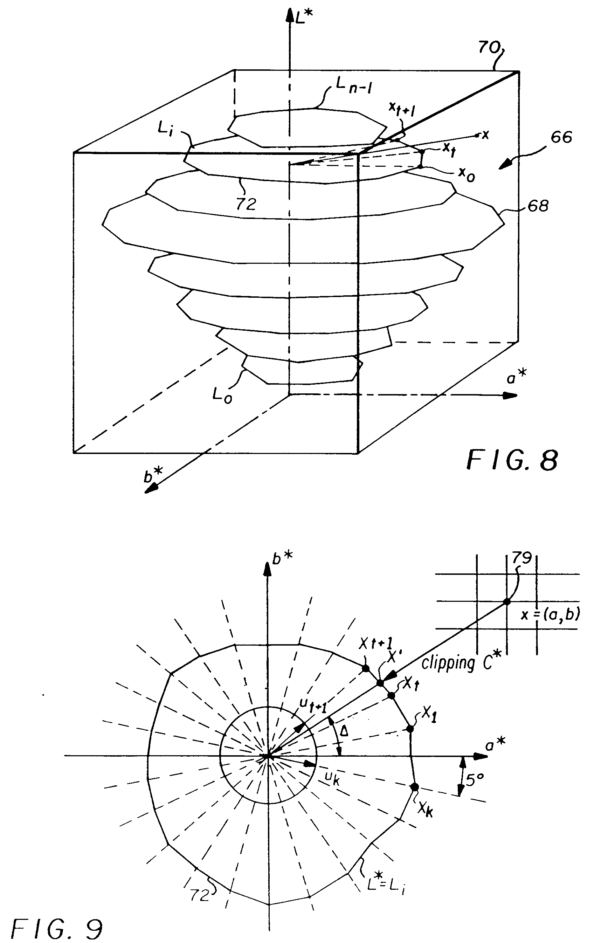

Figure 7 illustrates the method of the present invention being used to create an inverse look-up table, such as ILUT 40, from a look-up table, such as look-up table 36 and a gamut descriptor such as 38. In the first step 60 the look-up table is read 60. The output points or signals of the table 36 are signals or points scattered at irregular positions throughout the DICS The size of the inverse look-up table is then determined 62 based on the range in the DICS to be covered and the accuracy required for the interpolation being performed after the ILUT is created. Next, the gamut descriptor is created 64. Several methods are available to select gamut boundary points to form the gamut descriptor 66. In the preferred method, as discussed in the related application previously mentioned, a set (say 21) of parallel equally spaced planes $L_0$-$L_{n-1}$ (see Figure 8) are selected which are perpendicular to the L* axis and which correspond to the layers that the lattice points or signals are located at in the inverse look-up table to be constructed. For each plane a set (say 72) of unit vectors $u_1$ - $u_{72}$ (see Figure 9) are selected which are perpendicular to the L* axis. The angle between adjacent unit vectors preferably is equal and in this case is 5° (360/72 = 5). For each layer the gamut boundary points along the directions specified by the unit vectors are determined, and their coordinates in both the DDCS and DICS are stored for convenience of later searching in a list or an array. The list of coordinates in both the DICS and DDCS comprise the gamut descriptor which is stored in an array G[21][72][3] where 21 indicates the number of layers, 72 is the number of gamut boundary points on each layer and 3 indicates the three dimensional coordinates of each point.

The cube 70 in Figure 8 defines the range to be covered by the inverse look-up table to be constructed. The cube 70 completely encloses the gamut descriptor 66. In the construction of the ILUT, a set of lattice points in the cube 70 are chosen to be the entry points in the table. Since CIELAB (or CIELUV) space is a perceptually uniform color space, these lattice points are usually chosen to be equally spaced. For convenience and accuracy the number of layers in the gamut descriptor should be chosen to be the same as the number of layers in the inverse look-up table. For the purpose of simplicity of understanding the following will describe how to map the lattice points associated with layer 72, illustrated perspectively in Figure 8 and illustrated looking down the L* axis in Figure 9, into points in the DDCS. The operations described below are repeated for each layer in the cube 70.

The first step is to select 76 (Figure 6) a signal 79 or point x = (a, b) in the layer. The angle $\Delta$ of the vector x can be determined using conventional trigonometric equations $\Delta = (180°/\pi)\cos^{-1}(a/\sqrt{a^2 + b^2})$ From the angle $\Delta$ the adjacent points $x_t$ and $x_{t+1}$ in the gamut descriptor are determined. In non-preferred approaches the adjacent points can be determined by a binary search searching for the angles larger and smaller than the angle $\Delta$ or a sequential search can be performed. Preferably, however, based on the angle $\Delta$ the two adjacent points can be determined by dividing the angle by 5°, truncating to an integer which integer is the index into the list of points for the point xt satisfying $\Delta_t \leq \Delta \leq \Delta_{t+1}$ where $\Delta t$ and $\Delta_{t+1}$ are the angles of $x_t$ and $x_{t+1}$. From the line defined by the two adjacent points $x_t$ and $X_{t+1}$ and the line defined by the origin 0 and the point x, the point of intersection x' can be determined using conventional analytic geometry equations. Next, the system determines 78 (see Figure 7) whether the point x is inside the boundary 72. This operation can be performed by comparing the distances from the origin to the points x and x'. The distances from the origin to the points x and x' can be computed using the traditional square root of the sum of the squares equation. When x is larger than x' the point or signal x is outside the gamut, otherwise it is in-gamut. If the point x is inside the gamut, a conventional backward interpolation 80 can be performed to obtain the corresponding ILUT output value or signal. However, it is preferred that the interpolation be performed in accordance with the related application previously mentioned. If the point x is outside of the gamut a clipping strategy is applied to map x to a point x' which lies on the line of $x_t$ and $x_{t+1}$. A two point linear interpolation is then performed based on the two points $x_t$ and $x_{t+1}$ to find the corresponding output point in the DDCS. This output point is the output signal for point x which is stored 84 in the inverse look-up table as the output entry for the point x. The system then determines 86 whether additional lattice points remain to be determined and continues to cycle if so. The ILUT is output 88 if more points of the ILUT do not need to be determined. Pseudo-code for the above-described procedure is set forth below.

Pseudo-code for the ILUT Construction Procedure

GIVEN:

A LUT from the CMY space to the CIELAB (L*a*b*) space. The LUT contains the same number of sample points or signals in the CMY space, and in the L*a*b* space. The sample points or signals in the two color

5

spaces are 1-1 corresponding. The sample points in L*a*b* are non-lattice points.

OBJECTIVE:

Construct an ILUT from the L*a*b* space to the CMY space. The ILUT contains lattice points in the L*a*b* space.

ASSUMPTION:

Clipping C* is used to map out-of-gamut signals, or points to the gamut boundary.

THE PROCEDURE:

1) determine a range that the ILUT is to cover in the L*a*b* space (say, for example, $0 \leq L \leq 100$, $-110 \leq A, B \leq 110$);
2) determine a grid size of the ILUT (say, for example, 5 units for L*, a*, b*);
3) compute a gamut descriptor that contains a set of carefully selected gamut boundary points (say, for example, 21 layers for L*, 72 gamut boundary points for each layer, and assume they are equally angled);

```
for L = 0 to 100 at a step of 5
    for θ = 0° to 355° at a step of 5°
        3.1) find a gamut boundary point
             along the direction specified by θ;
        3.2) find its corresponding point in the CMY
             space by interpolation;
        3.3) store this pair of points in a gamut
             descriptor array.
    }
}
```

4) construct the ILUT (say, for example, 21x45x45 lattice points in the L*a*b*y space);

```
for L = 0 to 100 at a step of 5
    for a = -110 to 110 at a step of 5
        for b = -110 to 110 at a step
        of 5
        4.1) compute the angle θ_x of a
             point x = (a,b);
        4.2) find two adjacent points
             x_t, x_{t+1} in the gamut
             descriptor array whose
             angles θ_t and θ_{t+1} satisfy
             θ_t ≤ θ_x ≤ θ_{t+1};
        4.3) compute the intersection x'
             of two lines: x_t, x_{t+1}, and
             0, x, where 0 is the origin
             of the layer;


        4.4) if ( |0 - x| < |0 - x'| )
             then find the corresponding
             point in CMY for x by
             interpolation;
             else
             interpolate x' (based on
             x_t and x_{t+1} to get the
             corresponding point y in
             CMY;
             endif
        4.5) store x and y in the ILUT;


        }
    }
}
```

5) Return ILUT.

It is clear that in the above procedure no iterative search is required to create an ILUT in step 4. As compared to the existing methods of creating an inverse look-up table, which can take several hours, the present invention will create the look-up table in less than a minute. A 32 by 32 by 32 inverse look-up table can be created in about 20 seconds on a personal computer. The present invention makes it practical to create inverse look-up tables in real time. If the object is merely to map points on a random basis between two spaces rather than create the inverse look-up table only the gamut descriptor needs to be preserved between conversion operations.

The many features and advantages of the invention are apparent from the detailed specification and thus it is intended by the appended claims to cover all such features and advantages of the invention which fall within the true spirit and scope of the invention. Further, since numerous modifications and changes will readily occur

7

to those skilled in the art, it is not desired to limit the invention to the exact construction and operation illustrated and described, and accordingly all suitable modifications and equivalents may be resorted to, falling within the scope of the invention.

The invention is summarized as follows :

1. A method of mapping signals of a first coordinate system to signals of a second coordinate system using a known relationship between points within the two coordinate systems, comprising:

(a) determining a permissible signal boundary in the first coordinate system from a permissible signal range in the first coordinate system;

(b) determining whether a first signal in the first coordinate system is within the permissible signal boundary;

(c) converting the first signal into a second signal in the second coordinate system using the known relationship when the first signal is within the permissible signal boundary; and

(d) changing the first signal into a third signal within or on the boundary when the first signal is outside the boundary and converting the third signal into the second signal using the known relationship.

2. A method of mapping color signals from a device independent color space to a device dependent color space using a look-up table having lattice signals in the device dependent color space and irregularly spaced corresponding signals in the device independent color space, comprising:

(a) creating a gamut boundary from a device color gamut in the device independent color space;

(b) determining whether an independent space color signal in the device independent space is within the gamut using the gamut boundary descriptor;

(c) interpolating the color signal using the look-up table to obtain a corresponding dependent space color signal in the device dependent color space when the independent space color signal is in the gamut; and

(d) determining an in-gamut color signal in the device independent color space when the independent space color signal is outside the gamut and using the in-gamut color signal and the gamut boundary to interpolate to obtain the corresponding dependent space color signal in the device dependent color space.

3. A method of creating an inverse look-up table using a look-up table having lattice color signals in a device dependent color space and corresponding output signals in a device independent color space, comprising:

(a) producing a gamut boundary descriptor describing a gamut boundary in the device independent color space for a gamut in the device independent color space;

(b) determining whether a lattice color signal in the device independent color space is inside the gamut boundary;

(c) interpolating the lattice color signal to obtain a corresponding color signal in the device dependent color space using the look-up table when the lattice color signal is within the boundary;

(d) determining an in-gamut color signal in the device independent space when the lattice color signal is outside the gamut boundary and interpolating the in-gamut color signal using the gamut boundary to get the corresponding color signal in the device dependent color space; and

(f) storing the lattice color signal and the corresponding color signal in the inverse look-up table.

4. A method as recited in 3, wherein step (a) comprises:

(a1) designating planes of lattice color signals in the device independent color space;

(a2) selecting angles for gamut boundary signals within each plane; and

(a3) determining a gamut boundary signal along each angle and a corresponding device dependent space signal in the device dependent space using the look-up table.

5. A method as recited in 4, wherein the planes and angles create a uniform distribution of boundary signals.

6. A method as recited in 4, wherein step (c) comprises:

(c1) determining an angle to the lattice color signal;

(c2) determining the gamut boundary signals on either side of the angle;

(c3) determining an intersection boundary signal along the angle by determining an intersection of a line along the angle to the lattice color signal and a line between the gamut boundary signals on either side of the angle; and

(c4) comparing distances to the intersection boundary point and to the lattice color signal where the lattice color signal is within the gamut boundary when the distance of the lattice color signal is less than the distance of the intersection boundary signal.

7. A method as recited in 3, further comprising transforming color values using the inverse look-up table.

8. A method of transforming color values, comprising:

(a) determining a range of output color signals in a device independent color space of a look-up table used for converting from device dependent signals to device independent signals;

(b) producing a gamut descriptor having a gamut boundary in a device independent color space for a gamut in a device independent color space;

(c) determining whether a lattice color signal in the device independent color space is within the boundary;

(d) interpolating the lattice color signal to obtain a corresponding color signal in the device dependent color space using output values of the look-up table when the lattice color signal is within the boundary;

(e) determining an in-gamut color signal in the device independent space when the lattice color signal is outside the boundary and interpolating the in-gamut color signal using the boundary to get the corresponding color signal in the device dependent color space;

(f) storing the lattice color signal and the corresponding color signal in an inverse look-up table; and

(g) using the inverse look-up table to transform the color values by forward interpolation.

9. A method as recited in 8, further comprising storing the method of steps (a)- (e) in a storage device.

10. A method as recited in 8, further comprising storing the table of step (f) in a storage device.

11. A method of mapping, comprising:

(a) creating a gamut descriptor in a first space responsive to a gamut in the first space;

(b) determining whether a signal in the first space is in the gamut responsive to the gamut descriptor;

(c) clipping the signal to the gamut if not in the gamut; and

(d) converting the signal from the first space to the second space.

12. A method of converting color signals, comprising the steps of:

(a) creating an inverse look-up table using a look-up table and a gamut descriptor; and

(b) performing a forward interpolation of the color signals using the inverse look-up table.

13. A method, comprising the steps of:

(a) creating a gamut descriptor from a gamut; and

(b) determining whether a signal is in the gamut using the gamut descriptor.

14. A method as recited in 13, further comprising the step of:

(c) clipping the signal to the gamut when the signal is outside the gamut.

15. A method as recited in 14, wherein step (c) comprises interpolating the signal to obtain a gamut boundary signal.

16. A method as recited in 14, further comprising the steps of:

(d) interpolating the signal to create an output signal for an inverse look-up table.

17. A method of color conversion, comprising:

(a) creating an inverse look-up table from a gamut descriptor and a look-up table by backward interpolation; and

(b) converting color signals using the inverse look-up table by forward interpolation.

18. A method of color conversion, comprising:

(a) creating an inverse look-up table using backward interpolation and gamut clipping; and

(b) converting color signals using forward interpolation and the inverse look-up table.

19. A color value conversion apparatus, comprising:

means for creating an inverse look-up table from a look-up table and a gamut descriptor; and

means for accessing the inverse look-up table using color signals and forward interpolations to obtain output signals.

20. An apparatus for mapping, comprising:

means for creating a gamut descriptor in a device independent color space from a device gamut in the device independent color space;

means for determining whether a first signal in the device independent color space is within the gamut using the gamut descriptor;

means for interpolating using the first signal to obtain a corresponding signal in the device dependent color space when the first signal is in the gamut; and

means for determining an in-gamut signal corresponding to the first signal using the gamut descriptor and interpolating using the in-gamut signal to obtain the corresponding signal when the first signal is outside the gamut.

21. An apparatus, comprising: means for creating an inverse look-up table having lattice signals in a device independent color space using a look-up table and a gamut descriptor; and means for storing the inverse look-up table.

22. An apparatus for transforming color values, comprising:

means for creating an inverse look-up table conversion method from a gamut descriptor and a look-up table; and

means for storing the conversion method.

**Claims**

1. A method of mapping signals of a first coordinate system to signals of a second coordinate system using a known relationship between points within the two coordinate systems, comprising:

   (a) determining a permissible signal boundary in the first coordinate system from a permissible signal range in the first coordinate system;

   (b) determining whether a first signal in the first coordinate system is within the permissible signal boundary;

   (c) converting the first signal into a second signal in the second coordinate system using the known relationship when the first signal is within the permissible signal boundary; and

   (d) changing the first signal into a third signal within or on the boundary when the first signal is outside the boundary and converting the third signal into the second signal using the known relationship.

2. A method of mapping color signals from a device independent color space to a device dependent color space using a look-up table having lattice signals in the device dependent color space and irregularly spaced corresponding signals in the device independent color space, comprising:

   (a) creating a gamut boundary from a device color gamut in the device independent color space;

   (b) determining whether an independent space color signal in the device independent space is within the gamut using the gamut boundary descriptor;

   (c) interpolating the color signal using the look-up table to obtain a corresponding dependent space color signal in the device dependent color space when the independent space color signal is in the gamut; and

   (d) determining an in-gamut color signal in the device independent color space when the independent space color signal is outside the gamut and using the in-gamut color signal and the gamut boundary to interpolate to obtain the corresponding dependent space color signal in the device dependent color space.

3. A method of creating an inverse look-up table using a look-up table having lattice color signals in a device dependent color space and corresponding output signals in a device independent color space, comprising:

   (a) producing a gamut boundary descriptor describing a gamut boundary in the device independent color space for a gamut in the device independent color space;

   (b) determining whether a lattice color signal in the device independent color space is inside the gamut boundary;

   (c) interpolating the lattice color signal to obtain a corresponding color signal in the device dependent color space using the look-up table when the lattice color signal is within the boundary;

   (d) determining an in-gamut color signal in the device independent space when the lattice color signal is outside the gamut boundary and interpolating the in-gamut color signal using the gamut boundary to get the corresponding color signal in the device dependent color space; and

   (f) storing the lattice color signal and the corresponding color signal in the inverse look-up table.

4. A method as recited in claim 3, wherein step (a) comprises:

   (a1) designating planes of lattice color signals in the device independent color space;

   (a2) selecting angles for gamut boundary signals within each plane; and

   (a3) determining a gamut boundary signal along each angle and a corresponding device dependent space signal in the device dependent space using the look-up table.

5. A method as recited in claim 4, wherein the planes and angles create a uniform distribution of boundary signals.

6. A method as recited in claim 4, wherein step (c) comprises:

   (c1) determining an angle to the lattice color signal;

   (c2) determining the gamut boundary signals on either side of the angle;

   (c3) determining an intersection boundary signal along the angle by determining an intersection of a line along the angle to the lattice color signal and a line between the gamut boundary signals on either side of the angle; and

(c4) comparing distances to the intersection boundary point and to the lattice color signal where the lattice color signal is within the gamut boundary when the distance of the lattice color signal is less than the distance of the intersection boundary signal.

7. A method of transforming color values, comprising:

(a) determining a range of output color signals in a device independent color space of a look-up table used for converting from device dependent signals to device independent signals;

(b) producing a gamut descriptor having a gamut boundary in a device independent color space for a gamut in a device independent color space;

(c) determining whether a lattice color signal in the device independent color space is within the boundary;

(d) interpolating the lattice color signal to obtain a corresponding color signal in the device dependent color space using output values of the look-up table when the lattice color signal is within the boundary;

(e) determining an in-gamut color signal in the device independent space when the lattice color signal is outside the boundary and interpolating the in-gamut color signal using the boundary to get the corresponding color signal in the device dependent color space;

(f) storing the lattice color signal and the corresponding color signal in an inverse look-up table; and

(g) using the inverse look-up table to transform the color values by forward interpolation.

8. A method of mapping, comprising:

(a) creating a gamut descriptor in a first space responsive to a gamut in the first space;

(b) determining whether a signal in the first space is in the gamut responsive to the gamut descriptor;

(c) clipping the signal to the gamut if not in the gamut; and

(d) converting the signal from the first space to the second space.

9. A method, comprising the steps of:

(a) creating a gamut descriptor from a gamut; and

(b) determining whether a signal is in the gamut using the gamut descriptor.

10. An apparatus for mapping, comprising:

means for creating a gamut descriptor in a device independent color space from a device gamut in the device independent color space;

means for determining whether a first signal in the device independent color space is within the gamut using the gamut descriptor;

means for interpolating using the first signal to obtain a corresponding signal in the device dependent color space when the first signal is in the gamut; and

means for determining an in-gamut signal corresponding to the first signal using the gamut descriptor and. interpolating using the in-gamut signal to obtain the corresponding signal when the first signal is outside the gamut.

FIG. I

FIG. 2

EP 0 626 781 A2

| DEVICE I | DDCS1 → | f( ) | DICS → | h( ) | DICS → | g( ) | DDCS2 → | DEVICE II |
|---|---|---|---|---|---|---|---|---|

16 18 20 22 24

*FIG. 3*

| DEVICE I | DDCS1 → | FORWARD INTERPOLATION LUT 1 | DICS → | GAMUT CLIPPING | DICS → | BACKWARD INTERPOLATION LUT2 | DDCS2 → | DEVICE II |
|---|---|---|---|---|---|---|---|---|

16 18 20 22 24

*FIG. 4*

| DEVICE I | DDCS1 → | FORWARD INTERPOLATION LUT1 | DICS → | FORWARD INTERPOLATION ILUT2 | DDCS2 → | DEVICE II |
|---|---|---|---|---|---|---|

16 18 26 24

*FIG. 5*

FIG. 6

READ LUT ~60

DETERMINE ILUT SIZE ~62

COMPUTE GAMUT DESCRIPTION ~64

SELECT LATTICE POINT SIGNAL IN DICS & STORE IN ILUT AS ENTRY POINT SIGNAL ~76

INSIDE BOUNDARY 78

INTERPOLATE 80

GAMUT CLIP 82

STORE IN ILUT AS OUTPUT POINT SIGNAL 84

MORE POINTS 86

NO

OUTPUT ILUT 88

FIG. 7

FIG. 8

FIG. 9